# EUROPÄISCHE PATENTSCHRIFT

(11) **EP 2 354 608 B1**
(45) Veröffentlichungstag und Bekanntmachung des Hinweises auf die Patenterteilung: **04.06.2014**
(21) Anmeldenummer: 11150737.2
(22) Anmeldetag: 12.01.2011
(51) Int. Cl.: F16K 11/078, F16K 31/60

(54) **Ventilkartusche für eine Sanitärarmatur**
Valve cartridge for a sanitary fitting
Cartouche de soupape pour une armature sanitaire

(30) Priorität: 14.01.2010 DE 102010000910
(43) Veröffentlichungstag der Anmeldung: 10.08.2011
(73) Patentinhaber: Hansgrohe SE, 77761 Schiltach (DE)
(72) Erfinder: King, Jürgen, 78730, Lauterbach (DE)
(74) Vertreter: Patentanwälte Ruff, Wilhelm, Beier, Dauster & Partner

(56) Entgegenhaltungen:
- EP-A1- 1 677 037
- EP-A2- 1 130 177
- EP-A2- 2 302 272
- DE-A1-102005 030 515

## Beschreibung

Die Erfindung betrifft eine Ventilkartusche für eine Sanitärarmatur.

Ventilkartuschen enthalten eine vollständige Ventilsteuerung in einem abgeschlossenen Ventilgehäuse, das in eine Ausnehmung einer Sanitärarmatur eingesetzt werden kann. Aus dem Ventilgehäuse ragt ein Betätigungsschaft heraus, an dem ein Griff angebracht werden kann. Zum Steuern des Ventils kann der Betätigungsschaft verdreht und verschwenkt werden. Dabei dient üblicherweise die Verdrehung des Betätigungsschafts zum Steuern der Temperatur und das Verschwenken des Betätigungsschafts zum Ändern der Menge des Mischwassers.

Es ist bekannt, an Sanitärarmaturen Rastungen vorzusehen, die dem Benutzer einen fühlbaren Hinweis geben sollen, dass er das Ventil bis zu einer bestimmten Öffnungsstellung geöffnet hat, jenseits der der Wasserverbrauch dann möglicherweise unerwünscht hoch ist. Der Benutzer soll auf diese Weise vor einer zu weiten Öffnung des Ventils und damit einem zu hohen Wasserverbrauch gewarnt werden. Diese Raststellungen sollen aber überwunden werden können.

Hier ist ein Einhebelmischventil bekannt (DE 4340713), bei dem seitlich in einem Drehring außerhalb des Gehäuseoberteils eine von einer Schraubenfeder beaufschlagte Kugel angeordnet ist, die in eine Vertiefung des Griffs eingreifen kann. Durch Änderung der Schraubenfeder oder durch mehr oder weniger weites Einschrauben einer Schraube kann die Kraft, die man zum Überwinden der Raststellung benötigt, in gewissen Grenzen eingestellt werden.

Es ist bereits eine Ventilkartusche für eine Sanitärarmatur mit einem in dem Betätigungsschaft der Kartusche angeordneten vorgespannte Rastschieber vorgeschlagen worden, der als getrenntes Bauteil ausgebildet und in dem Betätigungsschaft eingesetzt ist. Der Rastschieber liegt an der Lagerhülse an (nachveröffentlichte EP 2302272 A2).

Weiterhin ist eine Ventilanordnung bekannt, bei der in dem Betätigungshebel ein Rastschieber eingeschraubt ist, der als getrenntes Bauteil ausgebildet ist. Er liegt einseitig an der Lagerhülse an (EP 1130177 A2).

Weiterhin ist ein sanitäres Ventil mit überwindbaren Anschlagmitteln bekannt (DE 102005030515 A1), bei dem ein Ringelement den Betätigungsschaft umgibt, das mit einem Rastzahn in eine Zahnreihe der Lagerhülse eingreift.

Ebenfalls bekannt ist eine Kartusche für eine Sanitärarmatur, bei der an der Unterseite des Griffs eine Zungenfeder mit einem Rastvorsprung angeordnet ist, die mit einem Gegenelement der Lagerhülse der Kartusche zusammenwirkt (EP 1677037 A1).

Der Erfindung liegt die Aufgabe zu Grunde, eine Ventilkartusche zu schaffen, die bei kleiner Baugröße eine auch bei langem Gebrauch konstant bleibende und gut einstellbare Rastcharakteristik beibehält, und bei der die unterschiedlichsten Anforderungen an die Charakteristik der Rastung erfüllt werden können.

Zur Lösung dieser Aufgabe schlägt die Erfindung eine Ventilkartusche mit den im Anspruch 1 genannten Merkmalen vor. Weiterbildungen der Erfindung sind Gegenstand von Unteransprüchen.

Die Ventilkartusche nach der Erfindung verwendet also für die Rastung ein getrenntes Bauteil, nämlich einen Rastschieber. Dieser wird in den Betätigungsschaft der Ventilkartusche eingesetzt und wirkt dann mit der Lagerhülse zusammen. Durch Austauschen des Rastschiebers oder auch nur durch Austauschen von Teilen des Rastschiebers kann die Rastcharakteristik der Ventilkartusche geändert werden.

Nach der Erfindung ist vorgesehen, dass die Ventilkartusche einen Einsatz enthält, der mit der Lagerhülse formschlüssig verbunden werden kann. Dieser Einsatz bildet dann eine Anlagefläche für den Rastschieber. und kann auch dann entnommen oder eingesetzt werden, wenn die Ventilkartusche selbst zusammengesetzt ist.

Wenn nun der Einsatz eine Anlagefläche für den Rastschieber bildet oder aufweist, so kann diese Anlagefläche unterschiedlich gestaltet werden, um auf diese Weise die Rastcharakteristik der Ventilkartusche zu ändern. Beispielsweise kann eine ebene Anlagefläche mehr oder weniger weit in Richtung auf den Rastschieber vorstehen oder zurückgesetzt sein. Damit kann die Kraft verändert werden, die zum Überwinden einer Rastung erforderlich ist.

Erfindungsgemäss ist weiters vorgesehen, dass die Lagerhülse eine das Auswechseln des Rastschiebers ermöglichende Ausnehmung aufweist. Damit ist es auch möglich, den Rastschieber ohne Zerlegen der Ventilkartusche auszutauschen, beispielsweise um ihn gegen einen Rastschieber mit einer anderen Charakteristik auszuwechseln.

Erfindungsgemäss ist desweiteren vorgesehen, dass diese Ausnehmung durch den Einsatz der die Anlagefläche für den Rastschieber bildet, abgedeckt ist.

Insbesondere kann in Weiterbildung der Erfindung vorgesehen sein, dass die Ausnehmung der Lagerhülse als Öffnung ausgebildet ist, durch die hindurch der Rastschieber in einer bestimmten Position des Betätigungsschafts hindurch geschoben werden kann.

In nochmaliger Weiterbildung der Erfindung kann vorgesehen sein, dass der Einsatz in zwei oder mehr verschiedenen Positionen mit der Lagerhülse verbunden werden kann. Beispielsweise kann vorgesehen sein, dass der Einsatz in zwei um 180 ° versetzten Positionen mit der Lagerhülse verbunden werden kann. Dabei können dann die beiden in jeweils einer Position die Anlagefläche bildenden Flächen unterschiedlich gestaltet sein, um auf diese Weise eine unterschiedliche Charakteristik der Rastung zu verwirklichen.

Üblicherweise ist ein solcher Rastschieber, der eine Schraubenfeder als Federelement aufweisen kann, mit einem kreisrunden Querschnitt versehen. Dies liegt einfach daran, dass Schraubenfedern üblicherweise um einen kreiszylindrischen Kern herum gewickelt werden. In nochmaliger Weiterbildung der Erfindung kann jedoch auch vorgesehen sein, dass der Rastschieber einen von einem Kreisquerschnitt abweichenden Querschnitt aufweisen kann, beispielsweise einen elliptischen Querschnitt, oder auch einen Kreisquerschnitt mit einer oder mehreren angesetzten Rippen. Wenn nun die Ausnehmung im Betätigungsschaft, in die der Rastschieber eingesetzt wird, an diesen Querschnitt angepasst ist, ist es möglich, den Rastschieber in zwei oder mehr unterschiedlichen Positionen einzusetzen. Dann können die beiden einander gegenüberliegenden Enden dieses Rastschiebers unsymmetrisch ausgebildet sein, um eine nochmals weitere Möglichkeit der Abänderung der Charakteristika der Rastung verwirklichen zu können.

Weitere Merkmale, Einzelheiten und Vorzüge der Erfindung ergeben sich aus den Ansprüchen der folgenden Beschreibung bevorzugter Ausführungsformen der Erfindung sowie anhand der Zeichnung. Hierbei zeigen:
- Figur 1: eine Seitenansicht einer Ventilkartusche nach der Erfindung;
- Figur 2: eine perspektivische Ansicht der Ventilkartusche der Figur 1;
- Figur 3: einen Schnitt längs Linie A - A in Figur 1;
- Figur 4: einen Schnitt in der gleichen Ebene wie in Figur 3 bei einer geänderten Stellung des Betätigungsschafts;
- Figur 5: eine Seitenansicht der Ventilkartusche mit herausgenommenem Rastschieber;
- Figur 6: eine der Figur 2 entsprechende Darstellung nach Entnahme des Einsatzes;
- Figur 7: einen Schnitt durch die Ventilkartusche längs Linie A - A in Figur 5;
- Figur 8: eine Seitenansicht einer Ventilkartusche einer weiteren Ausführungsform;
- Figur 9: eine der Figur 2 entsprechende Darstellung der Ausführungsform der Figur 8;
- Figur 10: einen Schnitt durch die Ventilkartusche längs Linie A - A in Figur 8;
- Figur 11: eine Seitenansicht einer Ventilkartusche einer nicht erfindungsgemässen Ausführungsform;
- Figur 12: einen Schnitt durch die Ventilkartusche der Figur 11 längs Linie B - B;
- Figur 13: eine Seitenansicht der Ventilkartusche der Figur 11 und 12 mit eingesetztem Einsatz;
- Figur 14: einen der Figur 12 entsprechenden Schnitt durch die Ventilkartusche der Figur 13.

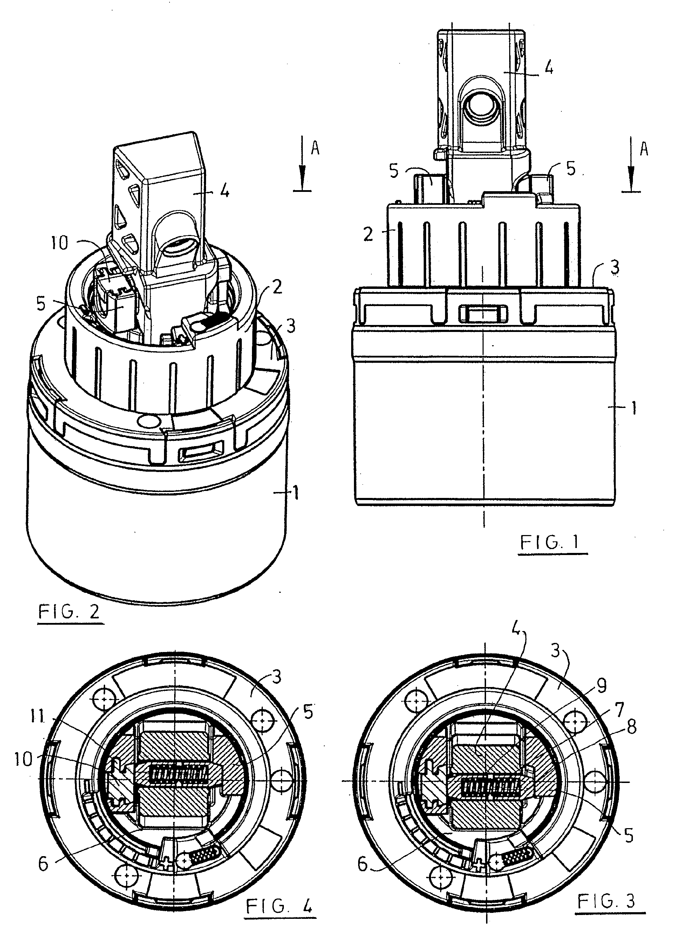

In der Seitenansicht der Figur 1 ist das Kartuschengehäuse 1 dargestellt, das in seinem unteren Bereich die Form eines Kreiszylinders aufweist. Nach oben hin ist auf das Kartuschengehäuse 1 ein Oberteil 2 mit einem Deckel 3 aufgesetzt, wobei das Oberteil 2 einen verringerten Durchmesser aufweist. Die Oberseite des Oberteils 2 ist offen. Dort ragt ein Betätigungsschaft 4 aus dem Kartuschengehäuse 1 heraus. Weiterhin sind zwei Ansätze 5 zu sehen, die Teil der in dem Kartuschengehäuse 1 drehbar gelagerten Lagerhülse 6 sind. Die Lagerhülse 6 ist in den in Figur 4 und 3 dargestellten Schnitten zu sehen.

Der Betätigungsschaft 4 ist in der Lagerhülse um eine Achse verschwenkbar gelagert, die in Figur 1 von rechts nach links verläuft. Sieht man sich die Schnitte der Figur 3 und Figur 4 an, die oberhalb der Schwenkachse liegen, so entspricht einer Verschwenkung des Betätigungsschafts 4 eine Verschiebung von unten nach oben.

In dem Betätigungsschaft 4 ist eine quer verlaufende Ausnehmung enthalten, die parallel zur Schwenkachse des Betätigungsschaft 4 verläuft. In dieser Ausnehmung ist ein Rastschieber 7 untergebracht, der in den Schnitten der Figur 3 und Figur 4 zu sehen ist. Der Rastschieber 7 enthält zwei Endhülsen 8, zwischen denen eine Druckfeder 9 wirksam ist. Die Druckfeder 9 beaufschlagt die beiden Endhülsen 8 voneinander weg.

Die bereits erwähnten Ansätze 5 der Lagerhülse 6 ragen über die Ausnehmung für den Rastschieber 7 nach oben hinaus. Die beiden Enden des Rastschiebers 7 liegen an der Innenseite der beiden Ansätze 5 an. Die Figur 3 zeigt die Stellung, in der das Ventil geschlossen ist. Es ist zu sehen, dass die dem Betätigungsschaft 4 zugewandte Innenseite des Ansatzes 5 eine Stufe aufweist, an der das rechte Ende des Rastschiebers 7 dann zur Anlage kommt, wenn man den Betätigungsschaft 4 in Richtung einer Öffnungsbewegung des Ventils verschwenkt, was sich in den Schnitten als eine Verschiebung nach oben darstellt. Dieser Zustand des Anliegens des Rastschiebers 7 an der Stufe ist in Figur 4 dargestellt. Die Figur 4 entspricht also einer mittleren Öffnungsstellung. Der Betätigungsschaft 4 kann weiter verschwenkt werden, wobei dann aufgrund der Schrägfläche der Stufe der Rastschieber komprimiert wird. Zum Komprimieren der Druckfeder 9 ist ein Aufwand erforderlich, den der Benutzer beim Betätigen des Betätigungsschafts 4 spürt. Damit wird der Benutzer darauf aufmerksam gemacht, dass er jetzt eine bestimmte Öffnungsstellung des Ventils überschreitet.

Wie man sowohl der Figur 2 als auch der Figur 4 entnehmen kann, ist in dem in den Figuren linken Ansatz 5 ein Einsatz 10 eingeschoben, der zwei Rippen 11 aufweist. Diese Rippen 11 greifen in entsprechende Nuten ein. Der Einsatz 10 kann nach oben herausgezogen werden, was man in der Figur 2 sehen kann. Die in Richtung auf den Betätigungsschaft 4 orientierte Innenseite des Einsatzes 10 verläuft bündig gegenüber der Innenseite des Ansatzes 5. Diese Innenseite des Einsatzes bildet die Fläche, an der die linke Endhülse 8 und damit der Rastschieber 7 anliegt.

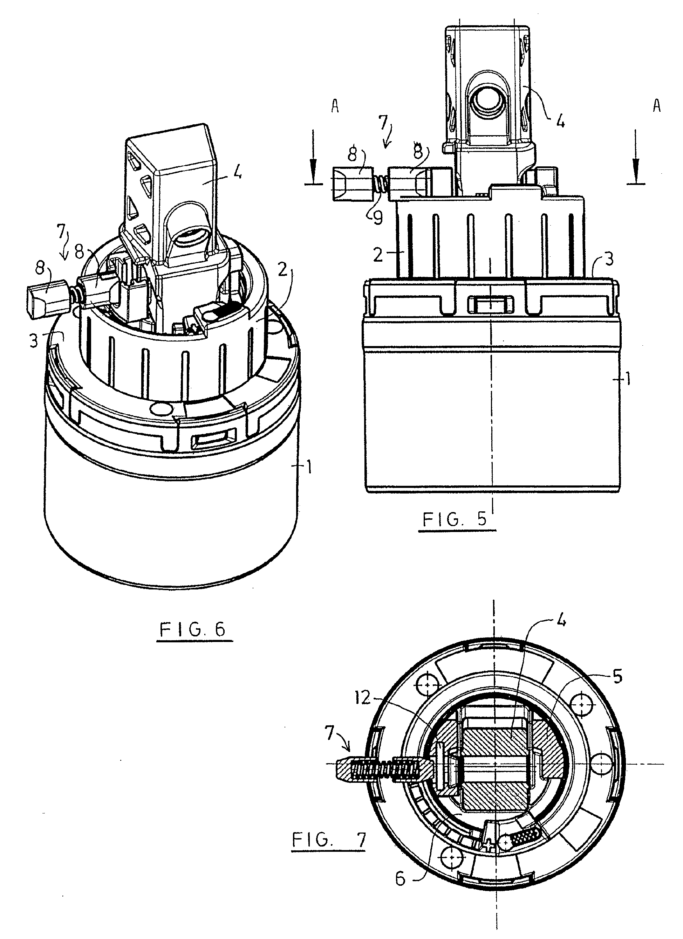

Dieser Einsatz 10 hat eine doppelte Funktion. Es wird hierzu auf die folgenden drei Figuren 5, 6 und 7 verwiesen. Zieht man den Einsatz 10 aus dem Ansatz 5 der Lagerhülse 6 heraus, und stellt man den Betätigungsschaft 4 in eine mittlere Position, die beispielsweise der geschlossenen Position des Ventils entspricht, so kann man den Rastschieber 7 durch die jetzt nicht mehr durch den Einsatz 10 abgedeckte Öffnung in dem Ansatz 5 herausnehmen. Diese Herausnahme des Rastschiebers 7 ist in den Figuren 5, 6 und 7 dargestellt. Man kann in der Figur 7 jetzt auch die Nuten 12 sehen, die den Rippen 11 des Einsatzes 10 entsprechen.

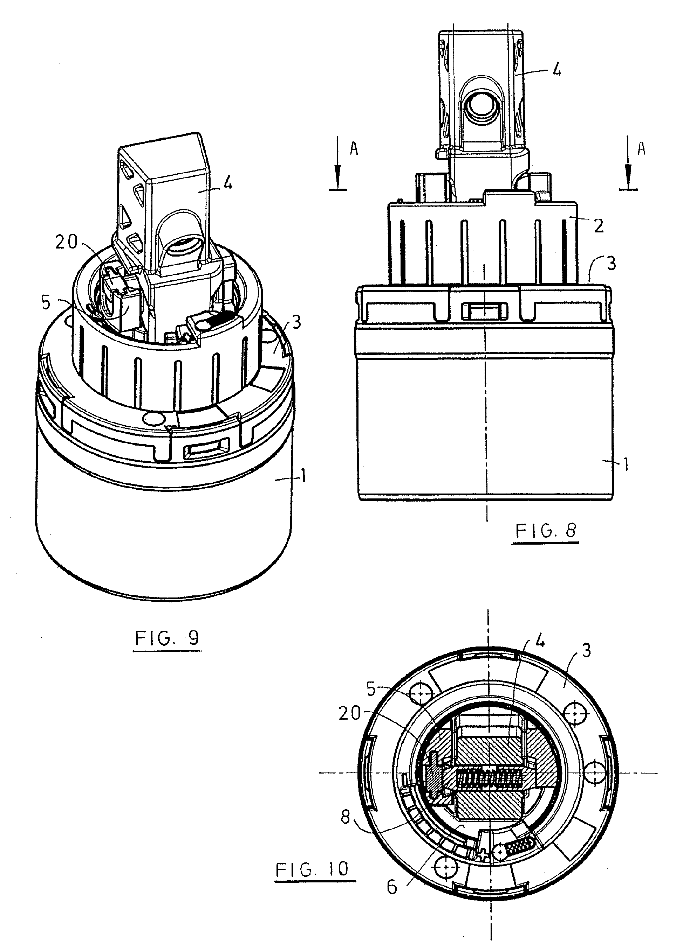

Die zweite Funktion des Einsatzes 10 kann man anhand der jetzt folgenden Figuren 8, 9 und 10 erkennen. Die Figuren 8, 9 und 10 entsprechen den Figuren 1 bis 3. Aus der Figur 9 ist zu sehen, dass jetzt ein anderer Einsatz 20 in dem linken Ansatz 5 eingesetzt ist, dessen geänderte Funktion in Figur 10 sichtbar wird. Der Einsatz 20 ist in Axialrichtung des Rastschiebers 7 deutlich dünner, so dass die dem Rastschieber zugewandte Innenseite nicht mehr bündig mit der Innenseite des Ansatzes 5 verläuft, sondern eine Vertiefung bildet. Diese Vertiefung ist in Richtung der Öffnungsbewegung des Ventils, also der Verschiebung des Betätigungsschafts 4 in Figur 10 nach oben, durch eine Stufe begrenzt. Im dargestellten Beispiel liegt die Stufe an der gleichen Öffnungsposition wie die Stufe auf der gegenüberliegenden Seite. Hier wird also eine Rastung mit einer Stufe verwirklicht, zu deren Überwindung eine größere Kraft als bei dem Einsatz 10 der vorhergehenden Ausführungsform erforderlich ist.

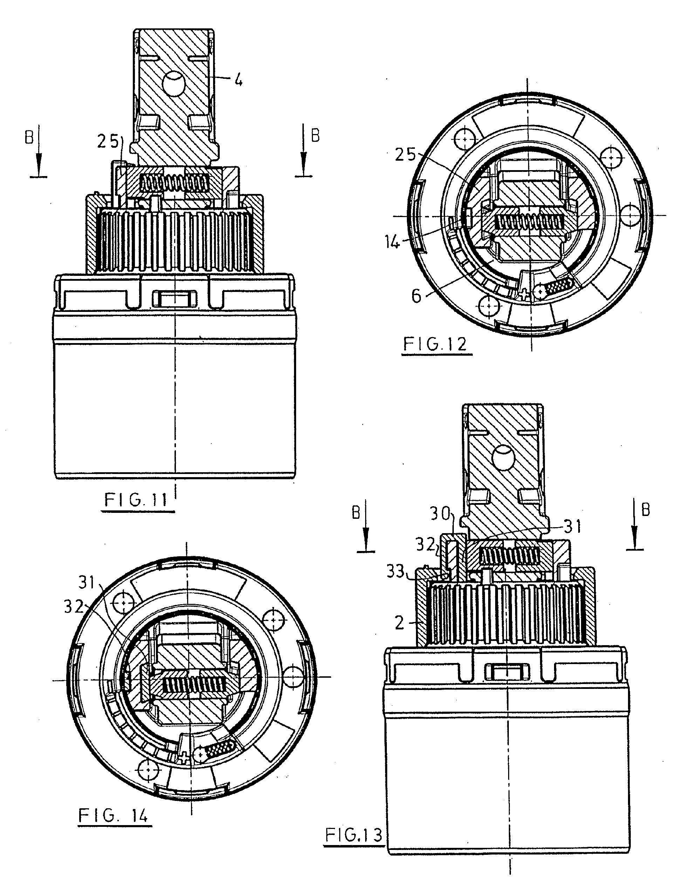

Nun zu der Ausführungsform, die in den Figuren 11 bis 14 dargestellt ist. Zum Verständnis beginnt man am besten mit der Figur 12. Der linke Ansatz 25 der Lagerhülse 6 weist auf der dem Rastschieber 7 zugewandten Innenseite eine Vertiefung auf, ähnlich wie der mit dem Einsatz 20 versehene Ansatz 5 in der Darstellung der Figur 10. In diesem Zustand wird also ohne einen Einsatz die gleiche Charakteristik erreicht, wie bei der Ausführungsform der Figur 10 mit dem Einsatz 20. Nun hat aber der Ansatz 25 bei der Ausführungsform der Figur 12 an der der Vertiefung abgewandten Außenseite noch eine als durchgehende Nut ausgebildete Kerbe 14, die senkrecht zur Papierebene verläuft. Auf den Ansatz 25 lässt sich nun ein Einsatz 30 von oben in Figur 11 und 13 einschieben. Dieser Einsatz 30 weist einen Schenkel 31 auf, der in die innere Vertiefung des Ansatzes 25 zu liegen kommt. Der Einsatz 30 weist aber auch einen äußeren Schenkel 32 auf, der in die Kerbe 14 an der Außenseite des Lagerhülsenansatzes 25 eingreift. An seinem freien Ende weist der Schenkel 32 eine Nase 33 auf, die in einen Hinterschnitt eingreift, so dass der Einsatz 30 auch in diesem Beispiel formschlüssig mit dem Ansatz 25 der Lagerhülse und damit mit der Lagerhülse 6 verbunden ist. Der innere Schenkel 31 füllt die Vertiefung auf der Innenseite des Lagerhülsenansatzes 25 aus, so dass jetzt eine Charakteristik erzeugt ist, die der Ausführungsform nach den Figuren 1 bis Figur 4 entspricht.

In den dargestellten Ausführungsformen sind die Stufen, die überwunden werden müssen, auf beiden Seiten des Betätigungsschafts 4 an der gleichen Stelle angeordnet. Dies ist aber nicht erforderlich. Die Stufen können an unterschiedlichen Stellen angeordnet sein, so dass bei der Öffnung des Ventils der Benutzer an mehreren Stellen spürt, dass er jetzt wieder eine Stufe des Öffnungsquerschnitts überschreitet.

## Patentansprüche

1. Ventilkartusche für eine Sanitärarmatur, mit
1.1 einem Ventilgehäuse (1),
1.2 einer in dem Ventilgehäuse (1) verdrehbar angeordneten Lagerhülse (6),
1.3 in der ein Betätigungsschaft (4) um eine in der Lagerhülse (6) gelagerte Achse schwenkbar gelagert ist, sowie mit
1.4 einer mindestens einseitig wirksamen Rastung zur Bildung einer Rastposition für die Bewegung des Betätigungsschafts (4), die
1.5 einen nachgiebigen und vorgespannten Rastschieber (7) aufweist, der
1.6 als getrenntes Bauteil ausgebildet und in dem Betätigungsschaft (4) der Ventilkartusche austauschbar beziehungsweise einsetzbar gehaltert ist und
1.7 in mindestens einer Position des Betätigungsschafts (4) an einem mit der Lagerhülse (6) formschlüssig verbindbaren eine Anlagefläche für den Rastschieber (7) bildenden ohne Zerlegen der Ventilkartusche austauschbaren Einsatz (10, 20) der Lagerhülse (6) anliegt, die
1.8 eine das Auswechseln des Rastschiebers (7) ermöglichende Ausnehmung aufweist, die
1.9 durch den Einsatz (10, 20) abgedeckt ist.

2. Ventilkartusche nach Anspruch 1, bei der die Ausnehmung der Lagerhülse (6) als Öffnung ausgebildet ist, durch die hindurch der Rastschieber (7) hindurch geschoben werden kann.

3. Ventilkartusche nach Anspruch 1 oder 2, bei der der Einsatz (10, 20) in zwei Positionen mit der Lagerhülse (6) verbindbar ist, wobei die dem Rastschieber (7) zugeordnete Fläche des Einsatzes in beiden Positionen unterschiedlich ausgebildet ist.

4. Ventilkartusche nach einem der vorhergehenden Ansprüche, bei der der Rastschieber (7) einen von einer Kreisform abweichenden Querschnitt aufweist und in mindestens zwei sich in der Orientierung um die Längsachse unterscheidenden Positionen mit dem Betätigungsschaft (4) verbindbar ist.

## Claims

1. Valve cartridge for a sanitary fitting, having
1.1 a valve housing (1),
1.2 a bearing sleeve (6), which is arranged in a rotatable manner in the valve housing (1),
1.3 and in which an actuating stem (4) is mounted in a pivotable manner about a pin mounted in the bearing sleeve (6), and also having
1.4 a detent, which acts at least on one side, for forming a locking position for the movement of the actuating stem (4), and which
1.5 has a resilient and prestressed locking slide (7), which
1.6 is formed as a separate component and is held in an exchangeable or deployable manner in the actuating stem (4) of the valve cartridge and
1.7 in at least one position of the actuating stem (4) rests against an insert (10, 20) of the bearing sleeve (6), said insert being connectable in a cohesive manner to the bearing sleeve (6), forming an abutment surface for the locking slide (7), and being exchangeable without dismantling the valve cartridge,
1.8. wherein the bearing sleeve comprises a recess which enables the locking slide (7) to be exchanged, and
1.9. wherein the recess is covered by the insert (10, 20).

2. Valve cartridge according to Claim 1, wherein the recess in the bearing sleeve (6) is in the form of an opening through which the locking slide (7) can be pushed.

3. Valve cartridge according to Claim 1 or 2, wherein the insert (10, 20) can be connected in two positions to the bearing sleeve (6), the surface of the insert assigned to the locking slide (7) being differently formed in the two positions.

4. Valve cartridge according to one of the preceding claims, wherein the locking slide (7) has a non-circular cross section and can be connected to the actuating stem (4) in at least two positions which differ in their orientation about the longitudinal axis.

## Revendications

1. Cartouche de soupape pour une armature sanitaire, avec
1.1 un corps de soupape (1),
1.2 un coussinet de palier (6) disposé de façon rotative dans le corps de soupape (1),
1.3 dans laquelle un arbre d'actionnement (4) est monté de façon pivotante autour d'un axe monté dans le coussinet de palier (6),
1.4 avec un crantage actif au moins sur un côté pour former une position d'encliquetage pour le mouvement de l'arbre d'actionnement (4), qui
1.5 présente un coulisseau d'encliquetage (7) souple et précontraint, qui
1.6 est réalisé sous la forme d'un élément séparé et qui est maintenu de façon échangeable ou insérable dans l'arbre d'actionnement (4) de la cartouche de soupape, et
1.7 dans au moins une position de l'arbre d'actionnement (4), repose sur un insert (10, 20) du coussinet de palier (6) pouvant être assemblé par emboîtement au coussinet de palier (6) et formant une face d'appui pour le coulisseau d'encliquetage (7) sans désassembler la cartouche de soupape, qui
1.8 présente un évidement permettant l'échange du coulisseau d'encliquetage (7), qui
1.9 est recouvert par l'insert (10, 20).

2. Cartouche de soupape selon la revendication 1, dans laquelle l'évidement du coussinet de palier (6) est réalisé sous la forme d'une ouverture, à travers laquelle le coulisseau d'encliquetage (7) peut être glissé.

3. Cartouche de soupape selon la revendication 1 ou 2, dans laquelle l'insert (10, 20) peut être assemblé au coussinet de palier (6) dans deux positions, dans laquelle la face de l'insert associée au coulisseau d'encliquetage (7) est réalisée différemment dans les deux positions.

4. Cartouche de soupape selon l'une quelconque des revendications précédentes, dans laquelle le coulisseau d'encliquetage (7) présente une section transversale s'écartant de la forme circulaire et peut être assemblé à l'arbre d'actionnement (4) dans au moins deux positions se différenciant par l'orientation autour de l'axe longitudinal.
